# EUROPEAN PATENT APPLICATION

(11) **EP 4 588 634 A1**
(43) Date of publication of application: **23.07.2025**
(21) Application number: 22958771.2
(22) Date of filing: 14.09.2022
(51) Int. Cl.: B27B 17/02, B23D 57/02

(54) **GUIDE BAR AND CHAIN SAW**

(71) Applicant: Yamabiko Corporation, Ohme-shi, Tokyo 198-8760 (JP)
(72) Inventor: KAWAMURA, Kunimune, Ohme-shi, Tokyo 198-8760 (JP)
(74) Representative: Winter, Brandl - Partnerschaft mbB
(86) International application number: PCT/JP2022/034409
(87) International publication number: WO 2024/057443

(57) **Abstract**

[Problem] To provide a technique capable of making damage unlikely to occur at a joining spot of sheet-like members constituting a guide bar.

[Solution] One aspect of the present invention provides a guide bar. This guide bar comprises three sheet-like members, which are a first metal sheet, a second metal sheet, and a resin sheet. A first surface of the resin sheet and a first inner surface of the first metal sheet make contact with each other. A second surface of the resin sheet and a second inner surface of the second metal sheet make contact with each other. Joining spots are provided to integrally join the three sheet-like members, at a plurality of spots in a region where the three sheet-like members overlap. A lateral surface of the resin sheet, the first inner surface, and the second inner surface form a groove through which a saw chain passes.

## Description

### TECHNICAL FIELD

The present invention relates to a guide bar and chainsaw.

### BACKGROUND ART

Patent Literature 1 discloses a guide bar produced by filling the cavity between side plates with a synthetic resin to form a middle plate and joining the side plates and middle plate together using the synthetic resin. PRIOR ART

### LITERATURE

### Patent Literature

[Patent Literature] Japanese Unexamined Patent Application Publication No. 2020-104292

### SUMMARY

### Problems to be Solved by Invention

In the guide bar of Patent Literature 1, the entire contacting surfaces of the side plates and middle plate are joined together. For this reason, when a twist, deformation, or the like occurs on the guide bar, the joined surfaces tend to be damaged, for example, peeled from each other.

In view of the above circumstances, the present invention provides a technology capable of making the joined locations of plate members constituting a guide bar less likely to be damaged.

### Means for Solving Problems

One aspect of the present invention provides a guide bar. This guide bar includes three plate members including a first metal plate, a second metal plate, and a resin plate. A first surface of the resin plate and a first inside surface of the first metal plate are in contact with each other. A second surface of the resin plate and a second inside surface of the second metal plate are in contact with each other. Joined locations in which the three plate members are joined together into one unit are provided in multiple locations of an area in which the three plate members overlap one another. A groove through which a saw chain passes is formed by a side surface of the resin plate, the first inside surface, and the second inside surface.

According to the present invention, the joined locations of the plate members constituting the guide bar become less likely to be damaged.

### BRIEF DESCRIPTION OF DRAWINGS

FIG. 1 is a drawing showing the overall configuration of a chainsaw 1.
FIG. 2 is a drawing showing an external view of a guide bar 10 seen from the left side.
FIG. 3 is a drawing showing an external view of the guide bar 10 seen from the right side.
FIG. 4 is a drawing showing plate members 100 that have yet to be joined together.
FIG. 5 is a drawing showing the plate members 100 that are bonded together.
FIG. 6 is a drawing showing the plate members 100 that are joined together.
FIG. 7 is a drawing showing an example of rivets having a different shape.
FIG. 8 is a drawing showing an example of a resin plate having a different shape.

### DETAILED DESCRIPTION

Now, embodiments of the present invention will be described with reference to the drawings. Various features described in the embodiments below can be combined with each other.

### Embodiment

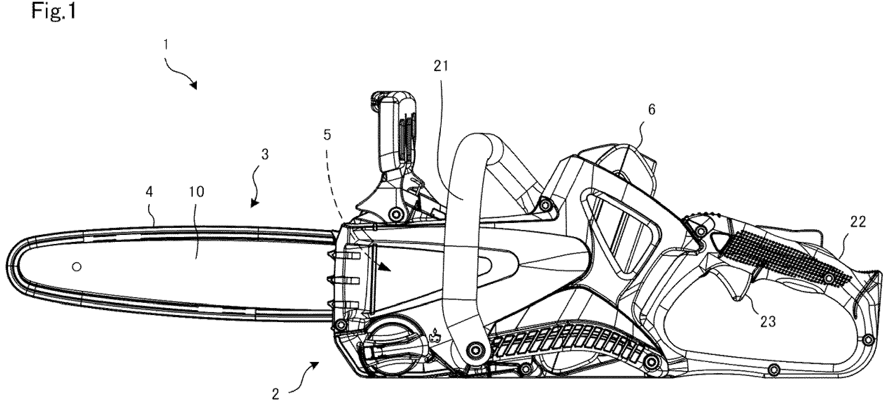

FIG. 1 is a drawing showing the overall configuration of a chainsaw 1. FIG. 1 shows the chainsaw 1 seen from the left. The chainsaw 1 includes a body unit 2, a work unit 3, a drive unit 5, and a battery 6. The body unit 2 is a portion serving as the body of the chainsaw 1 and holds the drive unit 5 while storing it. The body unit 2 holds the work unit 3 so as to expose it to outside and also removably holds the battery 6. The body unit 2 includes a front handle 21, a rear handle 22, and a lever 23.

The front handle 21 and rear handle 22 are handles that an operator grips when working using the chainsaw 1. The lever 23 is an operation device that the operator operates to activate the chainsaw 1. The work unit 3 is a unit that contacts and directly acts on a work object when the operator works using the chainsaw 1. In the present embodiment, the work object is a tree, a board, or the like, and the work unit 3 acts on it by cutting it. The work unit 3 includes a saw chain 4 and a guide bar 10.

The guide bar 10 is a plate member extending along the front-rear direction, and the rear end of the guide bar 10 is mounted on the body unit 2. The guide bar 10 has a groove on the perimeter thereof, and the annular saw chain 4 is wound along the groove. The saw chain 4 includes multiple top blades and multiple drive links that are both made of metal and connected to each other. When the drive links pass through the groove of the guide bar 10, the saw chain 4 rotates around the perimeter of the guide bar 10.

The drive unit 5 includes a motor, a drive gear, and the like and operates using power supplied from the battery 6 to rotationally drive the saw chain 4. Note that the drive unit may include an internal combustion engine in place of the motor. When the saw chain 4 is rotationally driven, the top blades cut the work object. As described above, the chainsaw 1 includes the guide bar 10, the saw chain 4 that passes through the groove of the guide bar 10, and the drive unit 5 that drives the saw chain 4.

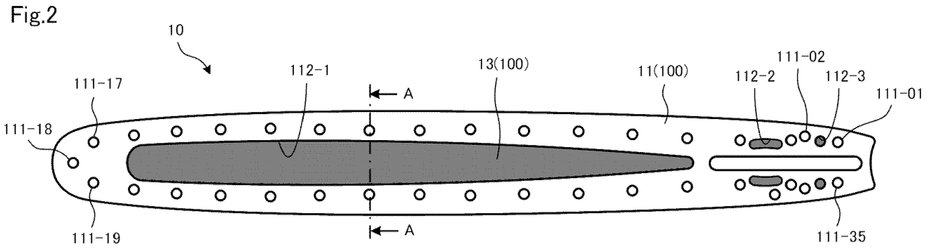

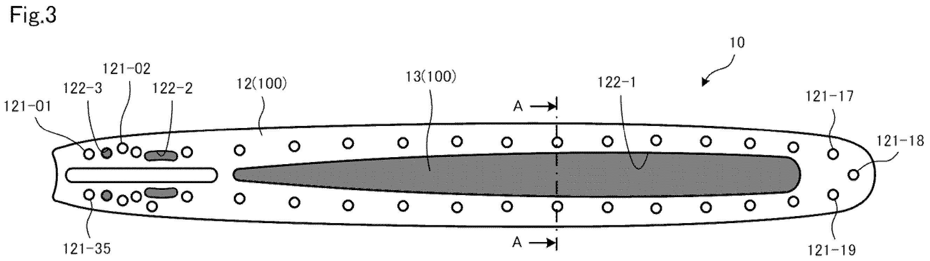

FIG. 2 is a drawing showing an external view of the guide bar 10 seen from the left side. FIG. 3 is a drawing showing an external view of the guide bar 10 seen from the right side. The guide bar 10 includes three plate members 100 consisting a first metal plate 11, a second metal plate 12, and a resin plate 13. The first metal plate 11 and second metal plate 12 are made of metal such as iron or alloy. However, any other metal may be used as a material as long as it has strength required by the guide bar 10. The resin plate 13 is made of synthetic resin. Preferably, the synthetic resin used as the material of the resin plate 13 has excellent heat resistance and oil resistance.

The first metal plate 11 includes first junctions 111-01, 111-02, ..., and 111-35 (hereafter referred to as the "first junctions 111" without distinguishing them from each other) and first cutout portions 112-1, 112-2, and 112-3 (hereafter referred to as the "first cutout portions 112" without distinguishing them from each other). The first junctions 111 are portions at which the three plate members 100 are joined together into one unit. In the present embodiment, the first junctions 111 are provided with holes for inserting rivets, and the three plate members 100 are joined together by rivets inserted into the holes.

The 35 first junctions 111 are provided universally on the first metal plate 11 from the tip (nose) to the root (mount) thereof. Of the first junctions 111, the first junctions 111-01 to 111-17 are provided on the upper side of the first metal plate 11, and the first junctions 111-19 to 111-35 are provided on the lower side thereof with the first junction 111-18 therebetween. The first cutout portions 112 are portions formed by cutout the first metal plate 11 for weight reduction. The resin plate 13 joined to the first metal plate 11 is seen through the first cutout portions 112.

The second metal plate 12 includes second junctions 121-01, 121-02, ..., and 121-35 (hereafter referred to as the "second junctions 121" without distinguishing them from each other) and second cutout portions 122-1, 122-2, and 122-3 (hereafter referred to as the "second cutout portions 122" without distinguishing them from each other). The second junctions 121 are portions at which the three plate members 100 are joined together into one unit. In the present embodiment, the second junctions 121 are provided with holes for inserting rivets, and the three plate members 100 are joined together by rivets inserted into the holes.

The 35 second junctions 121 are provided universally on the second metal plate 12 from the tip (nose) to the root (mount) thereof. Of the second junctions 121, the second junctions 121-01 to 121-17 are provided on the upper side of the second metal plate 12, and the second junctions 121-19 to 121-35 are provided on the lower side thereof with the second junction 121-18 therebetween. The second cutout portions 122 are portions formed by cutting out the second metal plate 12 for weight reduction. The resin plate 13 joined to the second metal plate 12 is seen through the second cutout portions 122.

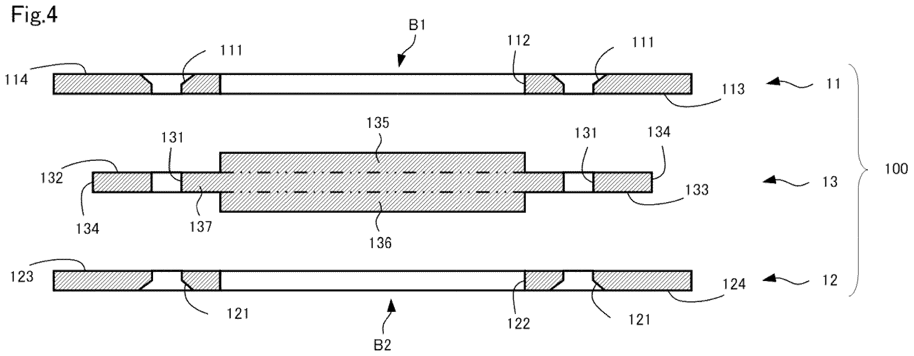

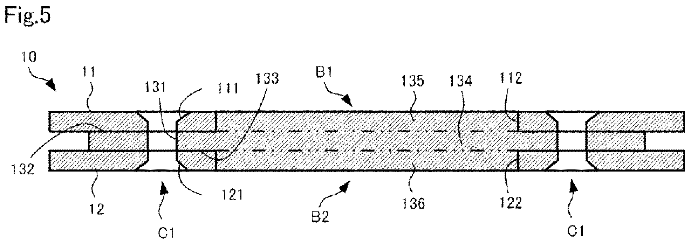

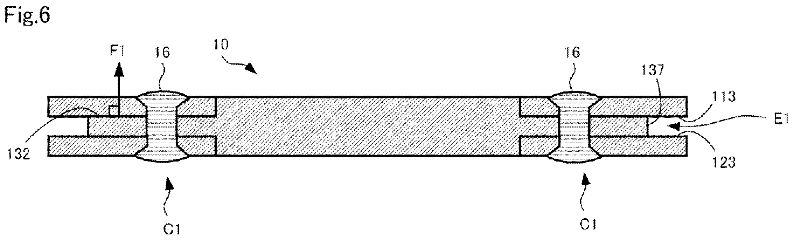

The guide bar 10 is formed by overlapping and joining together the first metal plate 11, second metal plate 12, and resin plate 13. A process of joining the three plate members 100 together will be described with reference to FIGS. 4 to 6. FIG. 4 is a drawing showing the plate members 100 that have yet to be joined together. FIG. 5 is a drawing showing the plate members 100 that are bonded together. FIG. 6 is a drawing showing the plate members 100 that are joined together. FIG. 6 shows an arrow view of the three plate members 100 taken along line A-A shown in FIG. 2.

First, the process will be described with reference to FIG. 4. The first metal plate 11 includes the first junctions 111, the first cutout portions 112, a first inside surface 113, and a first outside surface 114. The second metal plate 12 includes the second junctions 121, the second cutout portions 122, a second inside surface 123, and a second outside surface 124. The resin plate 13 includes junctions 131, a first surface 132, a second surface 133, a central portion 134, a first filler 135, and a second filler 136.

The first inside surface 113 is a surface facing the resin plate 13 (i.e., a surface facing the inside) of the two flat surfaces (the surfaces that are not the side surface) of the first metal plate 11. The first outside surface 114 is a surface opposite to the first inside surface 113 (i.e., a surface facing the outside). As used herein, the inside of each of the first metal plate 11 and second metal plate 12 refers to a side thereof facing the space sandwiched between the first metal plate 11 and second metal plate 12 (the space in which the resin plate 13 is disposed), and the outside thereof is a side opposite to the space.

The second inside surface 123 is a surface facing the resin plate 13 (i.e., a surface facing the inside) of the two flat surfaces (the surfaces that are not the side surface) of the second metal plate 12. The second outside surface 124 is a surface opposite to the second inside surface 123 (i.e., a surface facing the outside). The first surface 132 is a surface facing the first metal plate 11 of the surfaces of the resin plate 13. The second surface 133 is a surface facing the second metal plate 12 of the surfaces of the resin plate 13.

The first junctions 111, junctions 131, and second junctions 121 are provided with holes into which rivets are to be inserted, and the holes are provided in positions in which the holes are connected together when the three plate members 100 overlap one another. The first cutout portions 112 form a space B1 for weight reduction in the center of the first metal plate 11. The second cutout portions 122 form a space B2 for weight reduction in the center of the second metal plate 12.

The first filler 135 is positioned and shaped to fill the space B1 when the first metal plate 11 and resin plate 13 are joined together. The second filler 136 is positioned and shaped to fill the space B2 when the second metal plate 12 and resin plate 13 are joined together. The central portion 134 is a plate portion of the resin plate 13 except for the first filler 135 and second filler 136.

Next, the process will be described with reference to FIG. 5. As shown in FIG. 5, in the guide bar 10, the first surface 132 of the resin plate 13 and the first inside surface 113 of the first metal plate 11 are in contact with each other, and the second surface 133 of the resin plate 13 and the second inside surface 123 of the second metal plate 12 are in contact with each other. Also, in the guide bar 10, the first filler 135 of the resin plate 13 is fitted in the space B1 formed by the first cutout portions 112 of the first metal plate 11, and the second filler 136 of the resin plate 13 is fitted in the space B2 formed by the second cutout portions 122 of the second metal plate 12.

In a condition shown in FIG. 5, through holes C1 are formed by the first junctions 111, junctions 131, and second junctions 121. By inserting rivets into the holes C1 and caulking them, the three plate members 100 are joined together.

Next, the process will be described with reference to FIG. 6. Rivets 16 are installed in the holes C1. The rivets 16 are a type of rivets whose solid or hollow cylindrical shaft portion's both ends become round heads when caulked (deformed). In this way, in the guide bar 10, the joined locations in which the three plate members are joined together into one unit are provided in the multiple locations of the area in which the three plate members 100 overlap one another (hereafter referred to as the "overlapping area").

The overlapping area is, for example, an area where the three plate members 100 appear to overlap one another when the guide bar 10 is seen from the direction F1 of a normal to the first surface 132 of the resin plate 13. In other words, the overlapping area is an area where the first inside surface 113 of the first metal plate 11 and the first surface 132 of the resin plate 13 are in contact with each other and the second inside surface 123 of the second metal plate 12 and the second surface 133 of the resin plate 13 are in contact with each other.

In the present embodiment, the joined locations are locations in which the multiple first junctions 111 shown in FIG. 2 and multiple second junctions 121 shown in FIG. 3 are provided. The guide bar 10 uses the resin plate 13 as one of the plate members 100 and thus is lighter in weight than when all of the plate members 100 are metal plates. When joining together metal plates and a resin plate, which are different materials, by, for example, spot welding, the resin would melt, resulting in difficulty in joining them together. In the present embodiment, the plate members are joined together by the rivets in the joined locations. Thus, even when joining together the metal and resin, which are different materials, they are joined together without causing inconveniencies such as the melt of the resin.

Also, in the present embodiment, the first metal plate 11 and second metal plate 12 are cutout in the center thereof, and the resin plate 13 is shaped to fill the space B1 formed by cutting out the first metal plate 11 and the space B2 formed by cutting out the second metal plate 12.
If the spaces are cut out by cutting out the metal plates are left empty, chips (wood chips) may stay in the spaces during work, reducing workability. In the present embodiment, the resin plate 13 fills the spaces and prevents the stay of chips in the spaces.

In the guide bar 10 formed by joining the three plate members 100 together as described above, a groove E1 through which the saw chain 4 passes is formed by the side surface 137 of the resin plate 13, the first inside surface 113 of the first metal plate 11, and the second inside surface 123 of the second metal plate 12. That is, the bottom of the groove E1 is made of the resin. On the other hand, in a conventional guide bar where three metal plates are joined together by rivets, the bottom of a groove through which a saw chain passes is also made of the metal.

As described above, the saw chain 4 that passes through the groove E1 is made of the metal. For this reason, if the bottom of the groove is made of metal, the saw chain 4 would be damaged when the saw chain 4 contacts the bottom of the groove. To prevent this problem, the bottom of the groove and the saw chain 4 must be spaced from each other by a certain distance (e.g., 2 mm to 3 mm). However, as the distance between the bottom of the groove and the saw chain 4 is widened, a lubricant for smoothing the rotation of the saw chain 4 supplied to the groove through which the saw chain 4 passes becomes less likely to be transported in the rotation direction. This reduces the effect of the lubricant.

On the other hand, in the guide bar 10 according to the present embodiment, the side surface 137 made of the resin would be shaved even when the saw chain 4 contacts the side surface 137 serving as the bottom of groove E1. Thus, even when the side surface 137 is positioned as close to the saw chain 4 as possible, there is no risk that the saw chain 4 will be damaged, compared to when the bottom of the groove is made of metal. This makes the lubricant more likely to be transported in the rotation direction, increasing the effect of the lubricant.

It is assumed that the joined locations of the three plate members 100 are the entire area in which the three plate members 100 overlap one another. In this case, for example, when the guide bar 10 is bent or twisted by a force received from the work object, the outside surface of the bent guide bar 10 is stretched compared to the inside surface thereof. In this state, the contacting two surfaces of each two plate members (the first metal plate 11 and resin plate 13; and the resin plate 13 and second metal plate 12) receive a force to shift the two surfaces from each other due to the different degrees of stretch of the two surfaces. At this time, the joined two surfaces may be peeled from each other because the entire two surfaces are joined together.

In contrast, in the guide bar 10, the three plate members 100 are not joined together in the entire overlapping area. That is, the three plate members 100 are joined together in the multiple locations in which the first junctions 111 and second junctions 121 are provided in the overlapping area and are not joined together in the other locations. Thus, when a bend or the like occurs on the guide bar 10, the resin plate 13 can be shifted, or stretched or contracted in the unjoined locations. In this way, according to the present embodiment, the joined locations of the three plate members 100 constituting the guide bar are less likely to be damaged than when the three plate members are joined together in all of the area in which the plate members are in contact with each other (i.e., the overlapping area). Other

### Other Embodiments

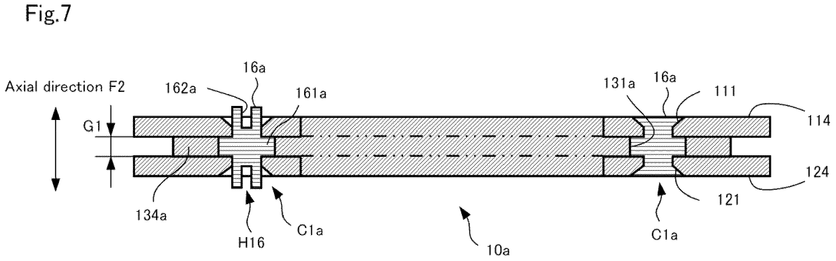

The shape of the rivets is not limited to that described in the embodiment. FIG. 7 is a drawing showing an example of rivets having a different shape. FIG. 7 shows a guide bar 10a joined by rivets 16a having a different shape from the rivets 16 shown in FIG. 6. FIG. 7 shows a yet-to-be-caulked rivet 16a and a caulked rivet 16a to clarify the description.

Each rivet 16a has a flange 161a in the center in the axial direction F2 thereof. The flange 161a is a portion protruding from the solid or hollow cylindrical portion of the rivet 16a and has the same thickness G1 as the resin plate 13 in the overlapping area. In an example shown in FIG. 7, connected holes C1a are formed by first junctions 111, junctions 131a and second junctions 121. The junctions 131a are provided with holes of a size that allows the flanges 161a to be inserted into the holes.

The flanges 161a thus provided continue to maintain the distance between the first metal plate 11 and the second metal plate 12 even when the resin of the resin plate 13 degrades. Thus, the looseness of the rivets are suppressed compared to when the flanges 161a are not provided.

Each rivet 16a also has end portions 162a forming hollow spaces H16 at both ends in the axial direction F2 thereof, and the end portions 162a are pressed into the hollow spaces H16. According to such a configuration, the end portions 162a of the rivets deformed by caulking are retreated into the hollow spaces H16. Thus, the protrusions of the rivets are made smaller than when the hollow spaces H16 are not formed. If the size of the hollow spaces H16 is large enough, the protrusions from the first outside surface 114 of the first metal plate 11 and the second outside surface 124 of the second metal plate 12 are completely eliminated.

The multiple joined locations may be provided in the overlapping area of the guide bar by crimping the resin plate 13 to fine undulations provided on the first inside surface 113 of the first metal plate 11 and the second inside surface 123 of the second metal plate 12. According to such a configuration, formation of undulations on the outside surfaces (first outside surface 114 and second outside surface 124) of the joined locations (the first junctions 111 and second junctions 121) of the metal plates (the first metal plate 11 and second metal plate 12) is prevented.

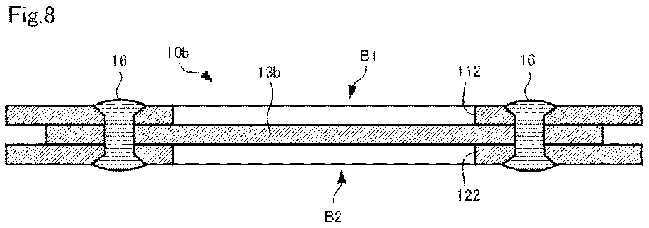

The shape of the resin plate is not limited to that described in the embodiment. FIG. 8 is a drawing showing an example of a resin plate having a different shape. FIG. 8 shows a guide bar 10b including a resin plate 13b having a different shape from the resin plate 13 shown in FIG. 4 and the like. The resin plate 13b is shaped to include only a central portion 134 without including the first filler 135 and second filler 136 shown in FIG. 4. Also in this case, as with the resin plate 13, the effect of the lubricant is increased. Moreover, the weight is reduced compared to when the first filler 135 and second filler 136 are included.

The shape of the metal plates is not limited to that described in the embodiment. For example, the metal plates do not have to be cut out. Even in this case, the use of the resin plate reduces the weight and increases the effect of the lubricant compared to when all of the plate members are metal plates. The shape of the guide bar is not limited to that described in the embodiment. For example, a replaceable sprocket may be provided at the tip of the guide bar.

The method for producing the guide bar 10 is not limited to that described in the embodiment. For example, the resin plate 13 may be formed as follows: a mold is formed by disposing the first metal plate 11 and the second metal plate 12 as shown in FIG. 5 and surrounding them; at this time, the first junctions 111 and second junctions 121 are sealed to prevent synthetic resin from flowing into them; and then, the heated, melted synthetic resin is poured into the mold and cooled to form the resin plate 13.

### Supplementary Notes

The present invention may be provided in aspects below.
(1) A guide bar comprising three plate members including a first metal plate, a second metal plate, and a resin plate, wherein: a first surface of the resin plate and a first inside surface of the first metal plate are in contact with each other, a second surface of the resin plate and a second inside surface of the second metal plate are in contact with each other, joined locations in which the three plate members are joined together into one unit are provided in a plurality of locations of an area in which the three plate members overlap one another, and a groove through which a saw chain passes is formed by a side surface of the resin plate, the first inside surface, and the second inside surface.
   According to such an aspect, the joined locations of the guide bar are less likely to be damaged.
(2) The guide bar according to (1), wherein the three plate members are joined together by rivets in the joined locations.
   According to such an aspect, the three plate members are joined together without having to melt the resin.
(3) The guide bar according to (2), wherein: the rivets each have a flange in the center in an axial direction thereof, and the flange has a thickness identical to a thickness of the resin plate in the area in which the three plate members overlap one another.
   According to such an aspect, the looseness of the rivets is suppressed even when the resin degrades.
(4) The guide bar according to (3), wherein: the rivets each have end portions forming hollow spaces at both ends in an axial direction thereof, and the end portions are pressed into the hollow spaces.
   According to such an aspect, the protrusions of the rivets are made smaller.
(5) The guide bar according to (1), wherein: the three plate members are joined together in the joined locations by crimping the resin plate on undulations provided on the first inside surface and the second inside surface.
   According to such a configuration, formation of undulations on the outside surface of the joined locations of the metal plates is prevented.
(6) The guide bar according to any one of (1) to (5), wherein: the first metal plate and the second metal plate are cutout in the center thereof, and the resin plate is shaped to fill spaces formed by cutting out the first metal plate and the second metal plate.
   According to such an aspect, the stay of chips in the spaces formed by cutting out the metal plates is prevented.
(7) A chainsaw comprising the guide bar described in any one of (1) to (6), wherein the chainsaw comprises: a saw chain configured to pass through the groove of the guide bar; and a drive unit configured to drive the saw chain. Of course, the present disclosure is not limited thereto. The embodiments and modifications described above may be arbitrarily combined and implemented.

Finally, while the various embodiments according to the present invention have been described above, the embodiments are only illustrative and are not intended to limit the scope of the invention. The above novel embodiments can be implemented in other various forms, and various omissions, replacements, or changes can be made thereto without departing from the gist of the invention. The embodiments and modifications thereof are included in the scope and gist of the present invention, as well as included in the scope of the invention set forth in the claims and equivalents thereof.

### List of Reference Signs

1: chainsaw
3: work unit
4: saw chain
10: guide bar
11: first metal plate
12: second metal plate
13: resin plate
16: rivet
100: plate member
111: first junction
112: first cutout portion
113: first inside surface
114: first outside surface
121: second junction
122: second cutout portion
123: second inside surface
124: second outside surface
131: junction
132: first surface
133: second surface
134: central portion
135: first filler
136: second filler
137: side surface
161a: flange
162a: end

## Claims

1. A guide bar comprising three plate members including a first metal plate, a second metal plate, and a resin plate, wherein:
a first surface of the resin plate and a first inside surface of the first metal plate are in contact with each other,
a second surface of the resin plate and a second inside surface of the second metal plate are in contact with each other,
joined locations in which the three plate members are joined together into one unit are provided in a plurality of locations of an area in which the three plate members overlap one another, and a groove through which a saw chain passes is formed by a side surface of the resin plate, the first inside surface, and the second inside surface.

2. The guide bar according to claim 1, wherein:
the three plate members are joined together by rivets in the joined locations.

3. The guide bar according to claim 2, wherein:
the rivets each have a flange in the center in an axial direction thereof, and
the flange has a thickness identical to a thickness of the resin plate in the area in which the three plate members overlap one another.

4. The guide bar according to claim 3, wherein:
the rivets each have end portions forming hollow spaces at both ends in an axial direction thereof, and
the end portions are pressed into the hollow spaces.

5. The guide bar according to claim 1, wherein:
the three plate members are joined together in the joined locations by crimping the resin plate on undulations provided on the first inside surface and the second inside surface.

6. The guide bar according to any one of claims 1 to 5, wherein:
the first metal plate and the second metal plate are cutout in the center thereof, and
the resin plate is shaped to fill spaces formed by cutting out the first metal plate and the second metal plate.

7. A chainsaw comprising the guide bar described in any one of claims 1 to 6, wherein the chainsaw comprises:
a saw chain configured to pass through the groove of the guide bar; and
a drive unit configured to drive the saw chain.
